Europäisches Patentamt

European Patent Office

Office européen des brevets

(19)

(11) Numéro de publication : **0 112 264**
**B1**

(12) **FASCICULE DE BREVET EUROPÉEN**

(45) Date de publication du fascicule du brevet :
**13.12.89**

(21) Numéro de dépôt : **83430031.1**

(22) Date de dépôt : **14.09.83**

(51) Int. Cl.⁴ : **A 22 B 3/00, A 22 B 5/02**

(54) Dispositif d'automatisation pour l'abbatage par saignée des animaux de boucherie.

(30) Priorité : **24.11.82 FR 8219830**

(43) Date de publication de la demande :
**27.06.84 Bulletin 84/26**

(45) Mention de la délivrance du brevet :
**13.12.89 Bulletin 89/50**

(84) Etats contractants désignés :
**BE CH DE GB IT LI NL SE**

(56) Documents cités :
**DE—A— 1 218 307**
**US—A— 3 230 577**

(73) Titulaire : **Aubert, Georges**
**Mas d'Armor La Roumiguière**
**F-13360 Roquevaire (FR)**

(72) Inventeur : **Aubert, Georges**
**Mas d'Armor La Roumiguière**
**F-13360 Roquevaire (FR)**

(74) Mandataire : **Roman, Michel**
**CABINET ROMAN 35, rue Paradis**
**F-13001 Marseille (FR)**

## Description

L'objet de l'invention concerne un dispositif d'automatisation pour l'abattage par saignée des animaux de boucherie.

Il est plus particulièrement destiné à l'exécution des opérations concernant l'adduction des animaux au poste d'abattage, à leur anesthésie et leur saignée, ainsi qu'à leur mise sur chaîne d'évacuation.

Dans les dispositifs utilisés à ce jour, les centres d'abattage comportaient des chaînes de travail avec de nombreux postes d'intervention manuelle avec tous les inconvénients qui en découlaient, notamment salissures, risques d'accidents et manque d'hygiène.

C'est ainsi que le brevet US-A-3 230 577 comme d'autres utilisent des aires de parcage, des postes de saignées rotatifs mais aucun ne revendique une plate-forme basculant sur un angle de 90° permettant de positionner verticalement l'animal de l'immobiliser en dégageant les parties soumises à la saignée et permettant d'assurer son accrochement pour son transport sur chaîne, tout en assurant la distribution par unité avec éléments provoquant l'avancement, l'arrêt et l'insensibilisation avec auto-équilibrage des secteurs basculants.

Le dispositif suivant l'invention supprime ces inconvénients et permet partant d'un groupe d'animaux vivants de les parquer en attente et d'assurer leur distribution unitaire sur le poste de saignée.

Il est constitué par la combinaison d'un secteur de parcage avec passerelle sélectionneuse pourvue d'un élément excitateur assurant l'avancement orienté vers une plate-forme basculante auto-obturante comportant les éléments anesthésiants et sacrificateurs, le tout complété par un système d'extraction pour le transport.

Sur les dessins annexés, donnés à titre d'exemple non limitatif, d'une des formes de réalisation de l'objet de l'invention :

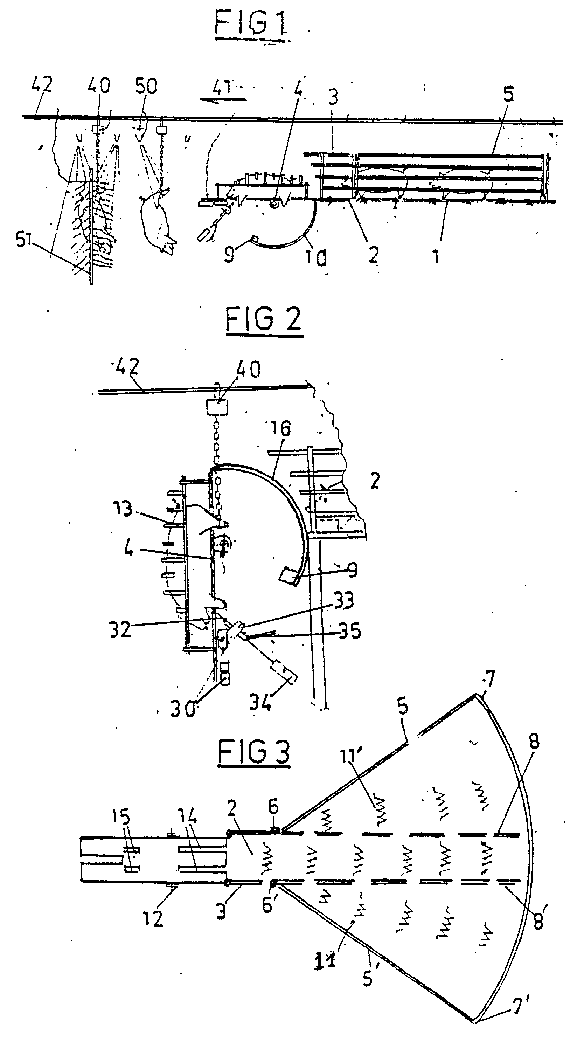

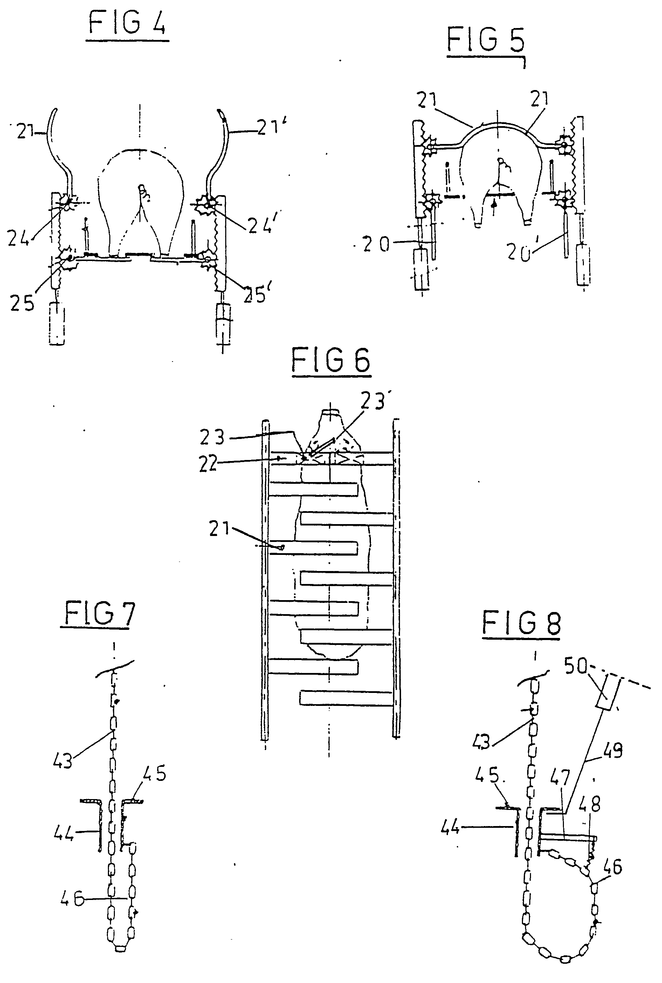

La figure 1 est une vue en élévation de l'ensemble du dispositif. La figure 2 montre à une échelle différente le détail de la plate-forme basculante avec appareillage de saignée. La figure 3 est une vue en plan de l'ensemble, parc, passerelle et plate-forme basculante. Les figures 4, 5, 6 représentent vu en élévation et en plan, le détail positionneur de la plate-forme basculante. Les figures 7 et 8 montrent vu en élévation les crochets et chaînes de suspension sur rail de l'animal abattu.

La plate-forme 1 (Figures 1, 2, 3) sert à rassembler les animaux. Elle se prolonge sur la passerelle 2 et le secteur basculant 4.

Les barrières 3 permettent la canalisation du troupeau et ne laisse le passage qu'à un seul animal.

Les barrières latérales 5, 5' pivotent sur les axes 6, 6'. Elles oscillent de la position 7, 7' à la position 8, 8'.

Le secteur basculant est solidaire d'une surface obturatrice en arc de cercle 10 et contrepoids 9. Il forme portillon 16, lorsque la plate-forme 4 à basculée.

Les passerelles et plates-formes sont équipées d'éléments de décharge électrique 11, 11' qui obligent les animaux à avancer.

Le secteur basculant 4 est muni de barrières latérales 13 et d'ouvertures 14, 15. Il oscille de 90° autour de l'axe 12 entraînant le bouclier 16 dans sa position obturante. Il comporte en outre les trappes 20, 20' et des arceaux 21, 21' oscillant autour des axes 24, 25, 24', 25' (figures 4, 5, 6).

Les arceaux 21, 21' immobilisent l'animal, alors que les trappes laissent le passage des pattes.

Les deux premiers arceaux 22 (figure 6) sont plus courts, alors que les autres 21 sont intercalés alternativement.

Les arceaux 22 se ferment derrière les oreilles de l'animal et permettent de l'anesthésier, soit par capsules 23, soit par laser 23'. L'électrification par contre contracte l'animal et n'est pas utilisée.

La saignée (figure 2) est obtenue par un dispositif monté à l'avant de la plate-forme basculante 4.

Il est constitué par un support coulissant 30, sur ce support est monté le couteau coulissant 32 dans la douille 33 et actionné par le cylindre 34. Un tuyau flexible 35 amène le sang dans un réservoir.

Les crochets d'abattoir 40 circulent suivant la flèche 41 sur le rail aérien 42.

Ces crochets comportent suivant les figures 7, 8 une chaîne 43 dont l'extrémité est fixée sur une douille coulissante 44 avec collerette 45.

Pour transporter un animal, il faut surélever la douille 44, écarter le bras 46, engager la patte de l'animal, puis lâcher la douille pour que la chaîne se resserre sur la patte à la manière d'un nœud coulant.

La douille 44 est munie d'un doigt 47 et d'un ressort 48.

Ainsi suivant la figure 2, lorsque l'animal est saigné le crochet 40 se présente avec une grande boucle vers la patte de l'animal et s'y engage. Le crochet continue sa course, la patte est serrée et à l'ouverture des arceaux 21, 22, l'animal se trouve suspendu.

Il se présente alors sous une douche 50 et passe ensuite entre les brosses de nettoyage 51.

L'ensemble de ces opérations est préférentiellement automatisé, soit par ordinateur, soit par commandes électroniques ou autre système aussi bien automatique que semi-automatique.

Les animaux à abattre et à saigner sont placés sur une plate-forme 1. Les impulsions électriques sur les pattes les obligent à avancer, puis à s'aligner sur la passerelle 2, jusqu'au basculeur 4 pendant que les barrières 5 se resserrent.

Lorsqu'un animal se trouve sur la plate-forme basculante, les trappes 20 s'ouvrent, les arceaux 21, 22 l'immobilisent, en même temps que l'anesthésie s'effectue par les capsules 23 ou par laser. Le bouclier forme le portillon 16 ce qui immobilise l'animal suivant celui qu'a atteint la plate-forme.

Le basculement à 90° met en marche l'ensemble sacrificateur formé par le couteau 32 qui glisse jusqu'à ce qu'il soit arrêté à la naissance de l'épaule et dès son arrêt, pénètre dans la gorge de l'animal dont le sang est recueilli par l'aspirateur 35.

A ce moment là, une patte arrière est saisie par la chaîne 43 dont le nœud coulant se referme sous l'action des douilles 46, doigts 47 et ressort 46. Un vérin 50 dont la tige 49 est en forme de fourche agit sur la douille en la soulevant ou l'abaissant pour former la boucle figures 7, 8.

Toutefois les formes, dimensions et dispositions des différents éléments pourront varier dans la limite des équivalents comme d'ailleurs les matières utilisées pour leur fabrications, sans changer pour cela la conception générale de l'invention qui vient d'être décrite.

## Revendications

1. Dispositif automatique d'abattage pour animaux de boucherie ayant pour objet de permettre le parcage guidé des animaux sur une plate-forme fixe (1) et l'adduction d'un animal à abattre sur un secteur d'immobilisation, caractérisé en ce que la plate-forme fixe (1) est équipée d'éléments de décharge électrique (11, 11') en ce qu'elle est pourvue de barrières latérales parallèles (8, 8'), pouvant s'écarter à partir de points d'articulation (6, 6'), formant ainsi une passerelle (2), laquelle est aussi munie d'éléments de décharge électrique (11, 11'), la passerelle (2) ne pouvant loger qu'un seul animal qui, propulsé par la poussée des autres animaux excités par les décharges électriques, est amené sur le secteur d'immobilisation, comportant une plate-forme basculante (4) de 90° par rapport à la plate-forme fixe (1) solidaire d'un portillon (16) obturant l'accès de la plate-forme basculante (4) lorsque cette dernière (4) bascule en position verticale, la plate-forme basculante (4) étant munie pour l'immobilisation des pattes de l'animal d'ouvertures (14, 15) dégagées par l'ouverture de trappes (20, 20') et de moyens d'immobilisation de la partie supérieure de l'animal en forme d'arceaux (21, 22) montés de façon oscillante et intercalés sur les parties latérales de la plate-forme basculante (4), avec vue en direction de la chaîne de traitement, l'arceau antérieur (23') qui est pourvu d'un dispositif anesthésiant (23), la plate-forme basculante (4) étant en outre munie d'un dispositif de saignée et, à la suite de la saignée, les pattes de l'animal étant suspendues à une chaîne de transport (42) par un dispositif d'accrochage (40) et dégagées de la plate-forme basculante (4).

2. Dispositif suivant la revendication 1 se caractérisant par le fait que la plate-forme basculante (4) autour de son axe (12) se place verticalement à la plate-forme fixe et que l'espacement la séparant de cette dernière est composé par une surface obturatrice en arc de cercle (10) avec contrepoids (9) pour fermer le portillon (16), des axes (25, 25') assurent le basculement des arceaux (21, 21').

3. Dispositif suivant les revendications 1 et 2 se caractérisant par le fait que le dispositif de saignée est constitué par un support coulissant (30) sur lequel est monté un couteau (32) coulissant dans une douille (33) et actionné par un cylindre (34) alors qu'un conduit flexible amène le sang dans un collecteur et que le dispositif d'accrochage est constitué par des crochets d'abattoir (40) circulant sur un rail aérien (42) et pourvus d'une chaîne (43) dont l'extrémité est fixée sur une douille coulissante (44) avec colerette (45), bras (46), doigt (47) et ressort (48).

## Claims

1. Automatic slaughtering device for butchery animals whose purpose is to make possible the guided penning of the animals on a fixed platform (1) and channeling of an animal to be slaughtered on to an immobilization sector, characterized in that the fixed platform (1) is equipped with electric discharge elements (11, 11'), in that it is provided with parallel lateral barriers (8, 8') which may move away from each other from articulation points (6, 6'), thus forming a footbridge (2) which is also provided with electric discharge elements (11, 11'), the footbridge (2) only being able to house one animal which, propelled by the push of the other animals excited by the electric discharges, is brought on to the immobilization sector, comprising a platform (4) swinging through 90° with respect to the fixed platform (1) and secured to a gate (16) closing off access to the swinging platform (4) when the latter swings to a vertical position, the swinging platform (4) being provided, for immobilizing the feet of the animal, with openings (14, 15) freed by the opening of traps (20, 20') and with means for immobilizing the upper part of the animal in the form of hoops (21, 22) mounted for swinging and inserted on the lateral parts of the swinging platform (4), with a view in the direction of the processing line, the front hoop (23') of which is provided with an anaesthetizing device (23), the swinging platform (4) being further provided with a blood-letting device and, following blood-letting, the feet of the animal being suspended from a conveyor chain (42) by a fastening device (40) and freed from the swinging platform (4).

2. Device according to claim 1, characterized in that the platform (4) swinging about its axis (12) is placed vertically to the fixed platform and the space separating it therefrom is formed by a closure surface in the form of an arc of a circle (10) with a counterweight (9) for closing the gate (16), shafts (25, 25') ensure pivoting of the hoops (21, 21').

3. Device according to claims 1 and 2, characterized by the fact that the blood-letting device is formed of a sliding support (30) on which is mounted a knife (32) sliding in a socket (33) and actuated by a cylinder (34) whereas a flexible duct conveys the blood to a collector and the fastening device is formed by slaughter hooks (40) travelling on an overhead rail (42) and provided with a chain (43) the end of which is fixed to a sliding socket (44) with collar (45), arm (46), finger (47) and spring (48).

## Patentansprüche

1. Automatische Schlachtanlage für Schlachtvieh zur Anordnung des Schlachtviehs auf einer festen Plattform (1) und dessen Zuführung zu einem Festhaltebereich, dadurch gekennzeichnet, daß die feste Plattform (1) mit elektrischen Entladeelementen (11, 11') und seitlichen parallel angebrachten Barrieren (8, 8') versehen ist, die sich über Drehpunkte (6, 6') ausschwenken lassen und somit eine Rampe (2) bilden, die ebenfalls mit elektrischen Entladeelementen (11, 11') versehen ist, wobei diese Rampe (2) jeweils nur Platz für ein Tier bietet, das, von den anderen durch Stromstöße angetriebenen Tieren geschoben, in den Festhaltebereich gelangt, welcher eine Plattform (4) besteht, die in einem Winkel von 90° zur festen Plattform nach unten geschwenkt werden kann und ein Tor (16) besitzt, durch das der Zugang zur schwenkbaren Plattform (4) verriegelt wird, wenn diese in die senkrechte Stellung schwenkt, wobei letztere zum Festhalten der Füße des Tieres Öffnungen (14, 15) in Form von Klappen (20, 20') sowie Festhaltevorrichtungen für den Oberteil des Tieres in Form von Bügeln (21, 22) besitzt, die freischwingend und einsetzbar auf den Seiten der schwenkbaren Plattform (4) angebracht sind, mit Blickrichtung zur Schlachtstraße, wobei der vordere Bügel (23') eine Betäubungsvorrichtung (23) und die schwenkbare Plattform (4) eine Abstechvorrichtung besitzt und die Füße des Tieres nach dem Abstechen mit einer Aufhängvorrichtung (40) an eine Transportkette (42) gehängt werden und von der schwenkbaren Plattform (4) wegbefördert werden.

2. Anlage nach Patentanspruch 1, dadurch gekennzeichnet, daß die um ihre Achse (12) schwenkende Plattform (4) sich senkrecht zur festen Plattform stellt und der Abstand zwischen beiden Plattformen aus einer kreisbogenförmigen Verschlußfläche (10) besteht, die mit Gegengewichten (9) zum Verschließen des Tors (16) versehen ist, wobei durch die Achsen (25, 25') das Schwenken der Bügel (21, 21') gewährleistet wird.

3. Anlage nach Patentanspruch 1 und 2, dadurch gekennzeichnet, daß die Abstechvorrichtung aus einem Gleitträger (30) besteht, auf dem ein Gleitmesser (32) in einer Buchse (33) angebracht ist, das durch einen Zylinder (34) betätigt wird, während das Blut über eine flexible Leitung in einen Behälter abgeführt wird und die Aufhängvorrichtung aus Schlachthaken (40) besteht, die an einer Deckenschiene (42) entlanglaufen und mit einer Kette (43) versehen sind, deren Ende an einer Gleitbuchse (44) mit Flansch (45), Arm (46), Finger (47) und Feder (48) versehen ist.

EP 0 112 264 B1

# FIG 1

# FIG 2

# FIG 3

EP 0 112 264 B1

FIG 4

21

21'

24

24'

25

25'

FIG 5

21   21

20

20'

FIG 6

23'

23

22

21

FIG 7

43

45

44

46

FIG 8

50

43

45

47

49

44

48

46

2